# EUROPEAN PATENT APPLICATION

(11) **EP 4 694 148 A1**
(43) Date of publication of application: **11.02.2026**
(21) Application number: 24841409.6
(22) Date of filing: 30.05.2024
(51) Int. Cl.: H04N 21/44

(54) **METHOD, APPARATUS, DEVICE AND COMPUTER READABLE STORAGE MEDIUM FOR VIDEO INTERACTION**

(71) Applicant: Beijing Youzhuju Network Technology Co., Ltd., Beijing 101299 (CN)
(72) Inventor: WANG, Jiawei, Beijing 100028 (CN); YUANG, Liping, Beijing 100028 (CN); ZHANG, Yuchen, Beijing 100028 (CN); LI, Hang, Beijing 100028 (CN)
(74) Representative: Grünecker Patent- und Rechtsanwälte PartG mbB
(86) International application number: PCT/CN2024/096503
(87) International publication number: WO 2025/245813

(57) **Abstract**

Embodiments of the present disclosure provide a method, apparatus, device and computer-readable storage medium for video interaction. The method includes: receiving a user input indicating a question to a target video; and determining reply content corresponding to the user input based on content description information of the target video and a first group of video images in the target video, wherein the first group of video images are obtained by performing frame extraction respectively on a plurality of video segments of the target video. Thus, the interaction process for the video is optimized, and the quality of the video reply content is improved.

## Description

### FIELD

Example embodiments of the present disclosure relate generally to the field of computers, and more particularly, to a method, apparatus, device, and computer-readable storage medium for video interaction.

### BACKGROUND

With rapid development of machine learning technologies, machine learning models now have more mature processing capabilities for text and static images. However, when faced with a video, especially a video with a long duration, a machine learning model has a poor processing capability, which generally cannot meet a user's requirements.

### SUMMARY

**In** a first aspect of the present disclosure, a method for video interaction is provided. The method may include receiving a user input, the user input indicating a question to a target video; and determining, based on content description information of the target video and a first group of video images in the target video, reply content corresponding to the user input, wherein the first group of video images are obtained by performing frame extraction respectively on a plurality of video segments of the target video.

In a second aspect of the present disclosure, an apparatus for video interaction is provided. The apparatus may include: a user input receiving module configured to receive a user input, the user input indicating a question to a target video; and a reply content determining module configured to determine, based on content description information of the target video and a first group of video images in the target video, reply content corresponding to the user input, wherein the first group of video images are obtained by performing frame extraction respectively on a plurality of video segments of the target video.

In a third aspect of the present disclosure, there is provided an electronic device, the device including at least one processing unit; and at least one memory coupled to the at least one processing unit and storing instructions for execution by the at least one processing unit. The instructions, when executed by the at least one processing unit, cause the electronic device to perform the method of the first aspect.

In a fourth aspect of the disclosure, there is provided a computer readable storage medium having stored thereon a computer program which, when executed by a processor, implements the method of the first aspect.

It should be understood that what is described in this section is not intended to limit the critical features or essential features of the embodiments of the present disclosure, nor is it intended to limit the scope of the present disclosure. Other features of the present disclosure will be readily appreciated from the following description.

### BRIEF DESCRIPTION OF THE DRAWINGS

**The** above and other features, advantages, and aspects of various embodiments of the present disclosure will become more apparent from the following detailed description taken in conjunction with the accompanying drawings. In the drawings, the same or similar reference numbers refer to the same or similar elements, where:
Fig. 1 illustrates a schematic diagram of an example environment in which embodiments of the present disclosure can be implemented;
Fig. 2 illustrates a flowchart of an interaction for a video according to some embodiments of the present disclosure;
Fig. 3 illustrates a principle example diagram of an interaction process for a video according to some embodiments of the present disclosure;
Fig. 4 illustrates a schematic structural block diagram of an apparatus for video interaction according to some embodiments of the present disclosure; and
Fig. 5 illustrates a block diagram of an electronic device in which one or more embodiments of the present disclosure may be implemented.

### DETAILED DESCRIPTION

Embodiments of the present disclosure will be described in more detail below with reference to the accompanying drawings. Although certain embodiments of the present disclosure are shown in the accompanying drawings, it should be understood that the present disclosure may be implemented in various forms and should not be construed as limited to the embodiments set forth herein, but rather, these embodiments are provided for a thorough and complete understanding of the present disclosure. It should be understood that the drawings and embodiments of the present disclosure are only for illustrative purposes and are not intended to limit the scope of protection of the present disclosure.

**In** the description of the embodiments of the present disclosure, the term "including" and the like should be understood as open-ended including, that is, "including but not limited to". The term "based on" should be understood as "based at least in part on". The term "one embodiment" or "the embodiment" should be read as "at least one embodiment". The term "some embodiments" should be understood as "at least some embodiments". Other explicit and implicit definitions may also be included below.

Herein, unless explicitly stated otherwise, "performing a step in response to A" does not mean that the step is performed immediately after "A", but one or more intermediate step may be included.

**It** will be appreciated that the data involved in the present technical solution (including but not limited to the data itself, the acquisition, use, storage and deletion of the data) should comply with the requirements of the corresponding legal regulations and related provisions.

**It** should be understood that, before the technical solutions disclosed in the embodiments of the present disclosure are used, the user should be informed of the type of the information, the usage range, the usage scenario, and the like related to the present disclosure and the authorization of the related user should be obtained in an appropriate manner according to relevant legal regulations. The related user may include any type of subjects, such as individuals, enterprises, groups.

For example, in response to receiving an active request from a user, prompt information is sent to the related user to explicitly prompt the related user that an operation requested to be executed by the related user needs to obtain and use information of the related user, so that the related user can autonomously select, according to the prompt information, whether to provide the information for software or hardware such as an electronic device, an application program, a server, or a storage medium that executes the operation of the technical solutions of the present disclosure.

As an optional but non-limiting implementation, in response to receiving an active request from a related user, a manner of sending prompt information to the related user may be, for example, a manner of a pop-up window, where the pop-up window may present the prompt information in a text manner. In addition, the popup window may also carry a selection control for the user to select whether he/she "agrees" or "disagrees" to provide information to the electronic device.

**It** can be understood that the above notification and user authorization process are only illustrative which do not limit the implementation of this disclosure. Other methods that meet relevant laws and regulations can also be applied to the implementation of this disclosure.

As used herein, the term "model" may learn association between corresponding inputs and outputs from training data, so that after the training is complete, a corresponding output may be generated for a given input. The generation of the model may be based on a machine learning technology. Depth learning is a machine learning algorithm that processes inputs and provides corresponding outputs by using a multi-tiered processing unit. A neural network model is one example of a model based on deep learning. Herein, "model" may also be referred to as "machine learning model, " "learning model, " "machine learning network, " or "learning network", which may be used interchangeably herein.

**A** "neural network" is a machine learning network based on depth learning. A neural network is capable of processing inputs and providing corresponding outputs, which typically include an input layer and an output layer and one or more hidden layers between the input layer and the output layer. Generally, a neural network used in a deep learning application includes a lot of hidden layers, thereby increasing the depth of the network. The various layers of the neural network are connected in sequence such that the output of a previous layer is provided as the input of a subsequent layer, where the input layer receives the input of the neural network and the output of the output layer is provided as the final output of the neural network. Each layer of the neural network includes one or more nodes (also referred to as processing nodes or neurons), and each node processes the input from a previous layer.

Generally, machine learning may roughly include three phases, namely a training phase, a testing phase, and an application phase (also referred to as an inference phase). In the training phase, a given model may be trained by using a large amount of training data, constantly and iteratively updating parameter values until the model obtains consistent reasoning that meets expected goals from the training data. By training, the model may be considered as being able to learn an association between input and output from training data (also referred to as mappings of input to output). A parameter value of the trained model is determined. In the testing stage, a test input is applied to the trained model, so as to test whether the model can provide a correct output, thereby determining the performance of the model. In the application phase, the model may be configured to process actual input based on the trained parameter value to determine corresponding output.

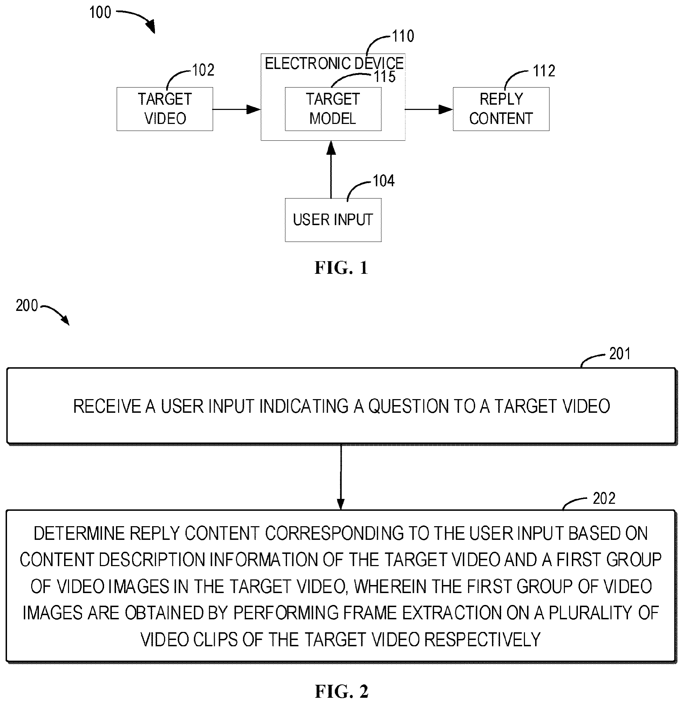

Fig. 1 illustrates a schematic diagram of an example environment 100 in which embodiments of the present disclosure can be implemented. As shown in Fig. 1, the environment 100 may include an electronic device 110.

The electronic device 110 may obtain a target video 102. The target video 102 may be provided in different formats. In addition, the target video 102 may be a video uploaded by a user, a video locally stored in the electronic device 110, or a video obtained by the electronic device 110 from another electronic device (for example, a remote device), and the like. The electronic device 110 may perform processing tasks on target video 102 by using a target model 115 to determine various visual details appearing in the video. Additionally, the electronic device 110 may generate reply content 112 corresponding to a user input 104 based on the user input 104 in conjunction with the visual details obtained by processing the target video 102. For example, the user input 104 may be "Describe the content of the video", "Help me find outfit of the female protagonist", "What do they eat". Correspondingly, the electronic device 110 may obtain, based on the visual details, such as "this video describes a process of the male and female protagonists from meeting each other to falling in love", "The outfit of the female protagonist is a school style", "What they ate was hot pot", and so on. That is, the user input 104 may be any content related to the target video 102. By using the target model 115, the electronic device 110 may perform processing tasks on the target video 102 based on a parsing result for the user input 104 to determine various visual details appearing in the video and determine reply content 112 matching the user input.

The electronic device 110 may, for example, perform an object detection task using a trained target model 115. The target model 115 may be a model local to electronic device 110 or a model installed on other electronic devices 110 (e. g., in a remote device). It should be noted that the target model 115 may be a single model or may include a plurality of models. As will be described below, in an embodiment of the present disclosure, the target model 115 may include at least a first model for generating a video content description and a second model for obtaining a corresponding result based on a user input, text content, and an image. The plurality of models may be end-to-end models. The target model 115 may be a general model integrating related functions of the first model and the second model according to an actual scenario.

The electronic device 110 may include any computing system with computing capabilities, such as various computing devices/systems, terminal devices, server devices, etc. The terminal device may be any type of mobile terminal, fixed terminal, or portable terminal, including a mobile phone, a desktop computer, a laptop computer, a notebook computer, a netbook computer, a tablet computer, a media computer, a multimedia tablet, a palmtop computer, a portable game terminal, a VR/AR device, and a Personal Communication System (PCS) device, a personal navigation device, a personal digital assistant (PDA), an audio/video player, a digital camera/camcorder, a positioning device, a television receiver, a radio broadcast receiver, an electronic book device, a game device, or any combination of the foregoing, including accessories and peripherals for these devices, or any combination thereof. The server device may be an independent physical server, may also be a server cluster or a distributed system formed by a plurality of physical servers, and may also be a cloud server providing basic cloud computing services such as cloud services, cloud databases, cloud computing, cloud functions, cloud storage, network services, cloud communications, middleware services, domain name services, security services, content distribution networks, and big data and artificial intelligence platforms. A server device may, for example, include a computing system/server, such as a mainframe, an edge computing node, a computing device in a cloud environment, etc.

**It** should be understood that the structure and function of the various elements in environment 100 are described for exemplary purposes only, and are not intended to imply any limitation on the scope of the disclosure.

Today, there are more and more situations in which text or images are processed using machine learning models. However, if the processing object becomes a video, due to the restriction of the model structure of the machine learning model, the machine learning model can only process a limited video length (about a few seconds). For long-duration videos, the machine learning model has to discard a part of visual information during processing, thereby the processing effect of the machine learning model will be significantly reduced.

Embodiments of the present disclosure propose an interaction solution for a video. According to the solution, a user input is received, the user input indicating a question to a target video. Reply content corresponding to the user input is determined based on content description information of the target video and a first group of video images in the target video, and the first group of video images are obtained by performing frame extraction respectively on a plurality of video segments of the target video. Therefore, content description information in the form of text and a small amount of video images after the frame extraction are obtained. The content description information may describe the video content of the target video, and the first group of video images may provide information at an image level as a supplement. In this case, when the interaction task for a video is performed, the number of images in the first group of video images is not too large, and the content description information is relatively comprehensive, thus avoiding discarding a portion of the visual information caused by an excessively long video length. In addition, the complexity will be reduced in the whole process, and the accuracy of the reply content in the interaction process can be ensured.

With continued reference to the drawings, a solution for video processing in accordance with an embodiment of the present disclosure is described below. Fig. 2 illustrates a flowchart of a process 200 for video processing in accordance with some embodiments of the present disclosure. The process 200 may be implemented at an electronic device, such as electronic device 110 of Fig. 1. For ease of discussion, the process 200 will be described below with reference to Fig. 1.

As shown in Fig. 2, at block 201, the electronic device 110 receives a user input indicating a question to a target video. The user input 104 generally includes some questions related to the target video, such as "Describe content of this video", "What did they eat?" etc. The user input may be in a form of text, or may be in a form of voice, in a form of gesture, etc.

At block 202, the electronic device 110 determines reply content corresponding to the user input based on content description information of the target video and a first group of video images in the target video, wherein the first group of video images are obtained by performing frame extraction respectively on a plurality of video segments of the target video.

For the target video 102, the electronic device 110 may call the first model in the target model 115 to process the target video 102 to obtain the content description information of the target video. For example, the first model may adopt a proprietary model such as a video description generation model. The characteristic of this kind of proprietary model is that the demand for computing resources is relatively low and the model is mature enough so that the accuracy is guaranteed when performing a single type of tasks.

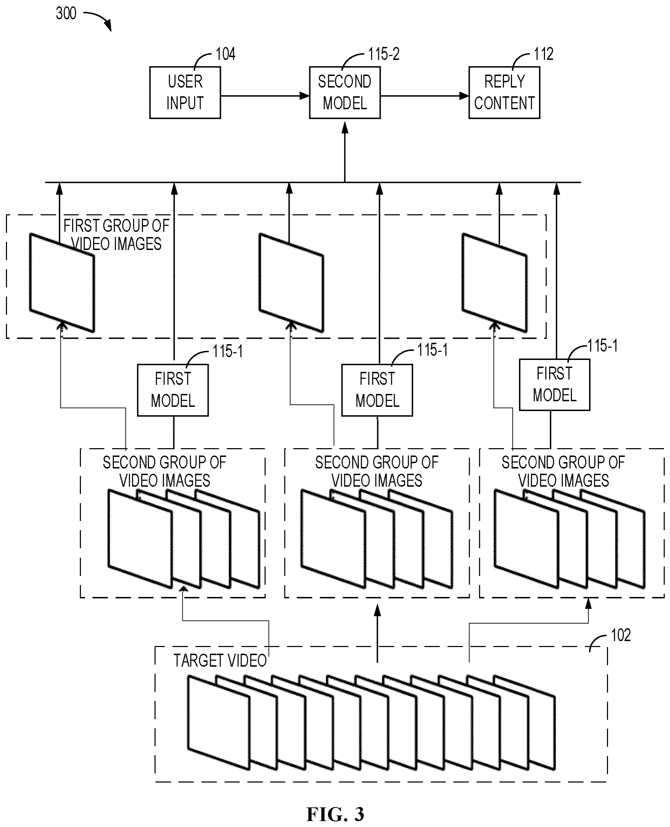

The content description information of the target video 102 may indicate visual details such as a character, a physical object, and a scenario in the video. That is, the content description information of the target video 102 is described in the text form. An example embodiment of obtaining content description information will be described below with reference to Fig. 3.

The electronic device 110 obtains a first group of video images by performing extraction on a plurality of video segments of the target video, respectively. For the target video 102, the electronic device 110 may split the target video 102 to obtain a plurality of video segments. A frame extraction process may be performed for each video segment to obtain a first group of video images.

For the target video 102, the electronic device 110 may split the target video 102 to obtain a plurality of video segments. For each video segment, a frame extraction process may be performed, so as to obtain a first group of video images. For example, frame extraction for each video segment may be extracting a relatively small number of frames, for example, 1 image or 2 images are extracted for each video segment. Taking splitting the target video 102 into 3 video segments and extracting 1 image from each video segment as an example, only 3 images are included in the first group of video images. In other words, the image information of the target video may be represented by using the first group of video images.

For determination of the content description information and frame extraction of the first group of video images for the target video 102, a trigger condition may be set as receiving the user input 104. In other words, after the target video corresponding to the user input is determined based on the user input, the determination of the content description information and frame extraction of the first group of video images are performed on the target video.

In addition, for the determination of the content description information and frame extraction of the first group of video images for the target video 102, the trigger condition may be set as receiving the target video 102. In other words, after obtaining the target video 102, the electronic device 110 may perform the determination of the content description information and frame extraction of the first group of video images on the target video 102. Thus, after the user input 104 is received, the content description information of the target video and the first group of video images corresponding to the user input may be directly called to determine the reply content.

**For** example, the determination of the reply content can be performed using a second model. The second model can be a multimodal model. That is to say, the input information of the second model is multi-dimensional. For example, the input information of the second model includes the user input 104, the content description information and the first group of video images.

The content description information and the first group of video images may be used as features of the target video 102. The content description information may convert video data with a large amount of data into text information with relatively small amount of data. The first group of video images may then be a key illustration of the target video 102.

Therefore, the second model may parse 104 the user input to obtain a parsing result. Thus, the second model may determine the reply content 112 corresponding to the user input 104 from the content description information and/or the first group of video images based on the parsing result.

**Through** the above process, even if the target video with a long processing time is processed, the expression conversion for the target video with a longer duration can be completed based on the content description information and the first group of video images obtained through the extraction. This manner effectively reduces the resources required for processing the target video. In addition, because the content description information describes the visual information of the target video in a text form, the accuracy of presentation of the target video may also be ensured. Based on this, the second model can obtain a reply corresponding to the user input with a relatively high quality based on the content description information and the first group of video images.

An example embodiment of determining the content description information of the target video is described below. In some embodiments, the electronic device 110 may split the target video into a plurality of video segments. For a video segment of the plurality of video segments, the electronic device 110 may determine content description information for the video segment. The electronic device 110 may determine content description information of the target video based on the content description information of the video segment.

Fig. 3 is a schematic diagram of a principle 300 for video processing. As shown in Fig. 3, the target video 102 and the like may be split into a plurality of video segments according to the duration of the target video 102. The duration of each video segment may be no more than a specified duration. For example, the specified duration may be 30 seconds, 1 minute, etc., which is not limited herein. If the duration of the target video 102 is 10 minutes and the specified duration is 30 seconds, 20 video segments may be obtained by splitting.

**In** the example shown in Fig. 3, the target video 102 is divided into 3 video segments, and for each video segment, the process of determining the content description information may be performed separately based on the first model 115-1. The process of the first model 115-1 determining the content description information for each video segment may be carried out in parallel, thereby improving efficiency.

After obtaining the content description information of each video segment, the description information of each video segment may be spliced to obtain the content description information of the target video. When splicing, the context of description information of different video segment may be combined. For example, when splicing, the last sentence of description information of each video segment and the first sentence of description information of a subsequent video segment to the video segment are checked to ensure that they are logically consecutive. If there is any incoherence, a corresponding adjustment or supplement is performed. For another example, before splicing, duplicate information detection is performed on descriptions of all video segments, and the same or similar descriptions are marked. When it is determined that there are duplicates, a portion with more comprehensive information or a clearer expression is retained, other duplicate portions are deleted. For another example, before splicing, semantic determination is performed on the description information of each video segment to determine potential errors or ambiguities. For errors or ambiguities, error correction may be performed according to the context, for example, when errors in time or event sequence are found in the content description information of the front and back video segments, and adjustment is performed. For another example, the emotion and tone of the content description information of each video segment are determined. In the splicing process, for example, if it is found that emotion is inconsistent with the tone, a corresponding adjustment may be performed in conjunction with the context.

**An** example embodiment of determining the content description information of the target video is described below. In some embodiments, the electronic device 110 obtains the second group of video images corresponding to a video segment by performing frame extraction on the video segment. The electronic device 110 may determine the content description information of the video segment by using the first model based on the second group of video images corresponding to the video segment.

**By** performing the frame extraction on the video segments, the processing pressure of the first model 115 -1 may be further reduced, and resources may be released. For example, for a video segment with a duration of 1 minute and a frame rate of 24 FPS, the number of images thereof is approximately 1440. For a video segment with a duration of 1 minute and a frame rate of 60 FPS, the number of images thereof is approximately 3600. If the number of video segments is large, the processing pressure is also brought to the first model 115 -1. Therefore, frame extraction processing may be performed on a video segment to reduce the data volume of the video segment. For the frame extraction, the same number of frames may be extracted for each video segment, or more frames may be extracted for the previous or subsequent video segments according to the playing sequence, and fewer frames or no frames may be extracted for the video segments in the middle according to the playing sequence.

Still referring to Fig. 3, for the target video 102, for example, it may be split into 3 video segments. Frame extraction is performed on each video segment to obtain a second group of video images. In an example shown in Fig. 3, the second group of video images may be divided into 3 groups. The process of determining the content description information is performed on the 3 groups of video images in the second group of video images in parallel based on the first model 115-1, to obtain the content description information of each video segment.

**In** some embodiments, the number of images in the second group of video images is greater than the number of images in the first group of video images. The purpose of the second group of video images is to extract the description information, thus requiring as rich content as possible. Based on this, the number of images in the second group of video images may be relatively large. In comparison, the purpose of the images in the first group of video images is to serve as a key illustration of the target video, so that the number of images in the first group of video images do not need to be too larger, and it is preferred to have less but fine images.

Correspondingly, for images in the second group of video images, a high frame extraction frequency may be used, that is, one image is extracted every fewer frames. For images in the first group of video images, a low frame extraction frequency may be used, that is, one image is extracted every more frames.

An example embodiment of determining the content description information of the target video is described below. In some embodiments, the electronic device 110 may obtain association description information, where the association description information includes content description information of at least one adjacent video segment of the video segment. The electronic device 110 may further determine the content description information of a video segment by using the first model based on the association description information and the second group of video images corresponding to the video segment.

**In** an efficient manner, individual video segments are processed in parallel by using the first model 115-1, to obtain content description information of the individual video segments. In addition, the content description information of each video segment may be obtained in a high accuracy manner.

For example, the execution process in the high accuracy manner may be as follows: first, the first model 115-1 is used to perform processing on the second group of video images corresponding to a first video segment to obtain the content description information of the first video segment. For example, the first video segment may be the first one in video segments obtained by splitting the target video in the playing sequence.

The content description information of the first video segment is used as the association description information. When processing the second video segment adjacent to the first video segment, a second group of video images corresponding to the second video segment and the association description information may be used as the input of the first model 115-1, so that the first model 115-1 determines the content description information of the second video segment. The beneficial effects are that the content description information can be generated in combination with the association of the previous and subsequent video segments, so that the content description information is more consistent and accurate.

Alternatively, the first video segment and the second video segment may be processed in parallel by using the first model 115-1 to obtain the content description information of the two video segments respectively. Thereafter, for the first video segment, the content description information of the second video segment may be used as the association description information. Therefore, the association description information and the second group of video images corresponding to the first video segment are used as input of the first model, so as to update or optimize the content description information of the first video segment. Similarly, for the second video segment, after the content description information of the third video segment is obtained, the content description information of the third video segment and the content description information of the first video segment are used as the association description information. Therefore, the content description information of the second video segment may be determined by using the first model 115-1 based on the association description information and the second group of video images corresponding to the second video segment.

Through the above process, in order to determine the content description information of the video segment, the description information of an adjacent video segment may be combined, so that the determined content description information is more consistent and accurate.

An example embodiment of a process for generating a second group of video image is described below. In some embodiments, the electronic device 110 iteratively performs the following steps until a predetermined condition is satisfied: one image extracted from a video segment is used as a reference image and the image is used as an image in the second group of video images. In the video segment, subsequent images of the reference image are sequentially compared with the reference image. If the difference between a first image and the reference image satisfies a specified condition, the reference image is replaced with the first image. The second group of video images is obtained based on the replaced reference image.

For frame extraction, an efficient manner is random extraction. For example, if 10 images need to be randomly extracted for each video segment, the images may be quickly extracted in a random frame extraction manner. In addition, there may be a frame extraction manner that makes the extraction result richer.

For example, an execution process of a frame extraction manner that makes the extraction result richer may be, for example, randomly extracting one image at a front position of the video segment as a reference image. Thereafter, the images subsequent to the reference image are compared with the reference image one by one to obtain a comparison result.

**The** similarity comparison may be a result of pixel difference comparison, a result of histogram comparison, a result of perceptual hash algorithm comparison, and so on. If the comparison result is that the two images are similar, the images subsequent to the reference image are ignored, and then the comparison is continued. On the contrary, if the comparison result is that the two images are not similar, an unsimilar image subsequent to the reference image is retained and used as a new reference image. At the same time, the new reference image is used as an image in the second group of video images.

**The** above steps are iteratively performed until the predetermined condition is satisfied. For example, the predetermined condition may be that the number of images of the second group of video images reaches a specified number, or all images in the video segment may be compared, and the like. Therefore, the difference between the images in the second group of video images may be large enough to generate the content description information more comprehensively.

**In** some embodiments, the electronic device 110 may obtain the first group of video images by performing frame extraction on the second group of video images corresponding to a video segment in the plurality of video segments. For the first group of video images, frame extraction may be directly performed on each video segment, to obtain a group of video images.

Alternatively, when the difference between images in the second group of videos is large enough, it may be considered that the images in the second group of video images are all representative images, and therefore, frame extraction may also be performed on the second group of video images to obtain the first group of video images.

**In** some embodiments, the first group of video images includes a plurality of images, and the process of the electronic device 110 determining the reply content corresponding to the user input may include: determining, based on the feature representation of each image in the plurality of images, a feature representation of the changed element among the plurality of images. Further, the electronic device 110 determines a feature representation of the user input and determines a feature representation of the content description information. The electronic device 110 may further generate the reply content by using the second model based on at least one of the feature representation input by the user, the feature representation of each image, the feature representation of the change element, and the feature representation of the content description information.

**If** the first group of video images includes a plurality of images, before generating the reply content, the electronic device 110 may further determine an association between the plurality of images, and extract a feature representation of the association. The association may indicate which element among the images has changed. It is not difficult to understand that the feature representation of the changed element among the plurality of images is determined based on the feature representation of each image in the plurality of images.

For example, the changed element may be a change in person. For example, a change in individuals, i.e., from one person to two; a change in groups, a change of surrounding from family members to colleagues; a change in a character expression or action, and so on. The changed elements may also be changes in physical objects, such as changes in daily items, changes in vehicles, changes in natural items, and the like. The change element may also be a change in a scenario, such as a change in an indoor scenario, a change from an office to a stairwell, a change in an outdoor scenario, a change between indoor scenario and outdoor scenario, a change in environmental conditions (weather, lighting, seasons, etc.), and so on. The changed element may in turn be a time change. For example, from early to late, from 2021 to 2024, and so on.

**In** addition, the electronic device 110 may further determine a feature representation of the user input and a feature representation of the content description information respectively. Finally, at least one of the feature representation of the user input, the feature representation of each image, the feature representation of the changed element, and the feature representation of the content description information is used as input of the second model 115-2, so as to obtain the reply content 112 generated by the second model 115-2.

**In** some embodiments, the first model and the second model are the same machine learning model. For example, the first model and the second model may be the same general model, that is, the first model and the second model may be the same target model. In this way, the target model is more adapted to the video processing scenario after being trained.

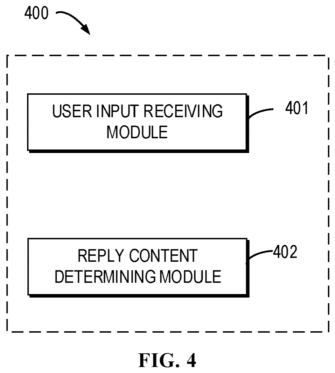

Fig. 4 illustrates a schematic structural block diagram of an apparatus 400 for device control according to some embodiments of the present disclosure. For example, the apparatus 400 may be implemented in or included in the electronic device 110. The various modules/components in the apparatus 400 may be implemented by hardware, software, firmware, or any combination thereof.

As shown, the apparatus 400 includes a user input receiving module 401 configured to receive a user input, the user input indicating a question to a target video; and a reply content determining module 402 configured to determine, based on content description information of the target video and a first group of video images in the target video, reply content corresponding to the user input, wherein the first group of video images are obtained by performing frame extraction respectively on a plurality of video segments of the target video.

**In** some embodiments of the present disclosure, the apparatus 400 further includes a content description information determining module, and this model may specifically include: a video splitting submodule configured to split the target video into a plurality of video segments; a video segment parsing submodule configured to determine, for a video segment of the plurality of video segments, content description information of the video segment; and a content description information determining and executing submodule configured to determine the content description information of the target video based on the content description information of the video segment.

**In** some embodiments of the present disclosure, the video segment parsing submodule may include: a frame extraction unit configured to obtain a second group of video images corresponding to the video segment by performing frame extraction on the video segment; and a content description information determining unit, configured to determine the content description information of the video segment by using the first model based on the second group of video images corresponding to the video segment.

**In** some embodiments of the present disclosure, the number of images in the second group of video images is greater than the number of images in the first group of video images.

**In** some embodiments of the present disclosure, the content description information determining and executing submodule may include: an association description information obtaining unit configured to obtain association description information, where the association description information includes content description information of at least one adjacent video segment of the video segment; and the content description information determining unit is further configured to determine the content description information of the video segment by using the first model based on the association description information and the second group of video images corresponding to the video segment.

**In** some embodiments of the present disclosure, the frame extraction unit is specifically configured to: iteratively perform the following steps until the predetermined condition is satisfied: use an image extracted from the video segment as a reference image and as an image in the second group of video images; sequentially compare subsequent images of the reference image with the reference image in the video segment; in response to determining that a difference between a first image and the reference image satisfies a specified condition, replace the reference image with the first image; and obtain the second group of video images based on the replaced reference image.

**In** some embodiments of the present disclosure, the apparatus 400 further includes a frame extraction module. The frame extraction module is configured to obtain the first group of video images by performing frame extraction on the second group of video images corresponding to the video segment in the plurality of video segments.

**In** some embodiments of the present disclosure, the first group of video images includes a plurality of images, and the reply content determining module 402 includes: a feature representation determining submodule configured to determine a feature representation of a changed element among the plurality of images based on a feature representation of each image of the plurality of images, determine a feature representation of the user input, and determine a feature representation of the content description information; and a reply content determining submodule configured to generate the reply content by using a second model, based on at least one of the feature representation of the user input, the feature representation of each image, the feature representation of the changed element, and the feature representation of the content description information.

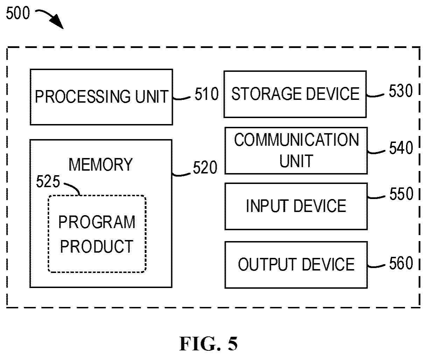

**Fig.** 5 illustrates a block diagram of an electronic device 500 in which one or more embodiments of the present disclosure may be implemented. It should be understood that the electronic device 500 shown in Fig. 5 is merely exemplary and should not constitute any limitation on the functionality and scope of the embodiments described herein. The electronic device 500 shown in Fig. 5 may include or may be implemented as the electronic device 110 of Fig. 1 and the apparatus 400 of Fig. 4.

As shown in Fig. 5, the electronic device 500 is in the form of a general-purpose electronic device. Components of the electronic device 500 may include, but are not limited to, one or more processors or processing units 510, a memory 520, a storage device 530, one or more communications units 540, one or more input devices 550, and one or more output devices 560. The processing unit 510 may be an actual or virtual processor and can perform various processes according to programs stored in the memory 520. In a multiprocessor system, a plurality of processing units execute computer executable instructions in parallel, so as to improve the parallel processing capability of the electronic device 500.

The electronic device 500 typically includes a number of computer storage media. Such media may be any available media that are accessible by the electronic device 500, including, but not limited to, volatile and non-volatile media, removable and non-removable media. The memory 520 may be a volatile memory (e. g., a register, cache, random access memory (RAM)), non-volatile memory (e.g., read-only memory (ROM), electrically erasable programmable read-only memory (EEPROM), flash memory), or some combination thereof. The storage device 530 may be a removable or non-removable medium and may include a machine-readable medium such as a flash drive, a magnetic disk, or any other medium that can be used to store information and/or data and that can be accessed within the electronic device 500.

**The** electronic device 500 may further include additional removable/non-removable, volatile/nonvolatile storage media. Although not shown in Fig. 5, a magnetic disk drive for reading from or writing to a removable, nonvolatile magnetic disk such as a "floppy disk" and an optical disk drive for reading from or writing to a removable, nonvolatile optical disk may be provided. In these cases, each drive may be connected to a bus (not shown) by one or more data media interfaces. The memory 520 may include a computer program product 525 having one or more program modules configured to perform various methods or actions of various embodiments of the present disclosure.

**The** communication unit 540 implements communication with other electronic devices through a communication medium. In addition, functions of components of the electronic device 500 may be implemented by a single computing cluster or a plurality of computing machines, and these computing machines can communicate through a communication connection. Thus, the electronic device 500 may operate in a networked environment using logical connections to one or more other servers, network personal computers (PCs), or another network node.

**The** input device 550 may be one or more input devices such as a mouse, keyboard, trackball, etc. The output device 560 may be one or more output devices such as a display, speaker, printer, etc. The electronic device 500 may also communicate with one or more external devices (not shown) such as a storage device, a display device, or the like through the communication unit 540 as required, and communicate with one or more devices that enable a user to interact with the electronic device 500, or communicate with any device (e. g., a network card, a modem, or the like) that enables the electronic device 500 to communicate with one or more other electronic devices. Such communication may be performed via an input/output (I/O) interface (not shown).

According to an exemplary implementation of the present disclosure, a computer readable storage medium is provided, on which a computer-executable instruction is stored, where the computer executable instruction is executed by a processor to implement the above-described method. According to an exemplary implementation of the present disclosure, there is also provided a computer program product, which is tangibly stored on a non-transitory computer readable medium and includes computer-executable instructions that are executed by a processor to implement the method described above.

According to example implementations of the present disclosure, a computer program product or a computer program is provided, where the computer program product or the computer program includes computer instructions, and the computer instructions are stored in a computer-readable storage medium. The processor of the computer device reads the computer instruction from the computer-readable storage medium, and the processor executes the computer instruction, so that the computer device performs the method provided in the various optional manners in Fig. 2 to Fig. 3, and therefore, details are not described herein again.

Aspects of the present disclosure are described herein with reference to flowchart and/or block diagrams of a method, an apparatus, a device and a computer program product implemented in accordance with the present disclosure. It will be understood that each block of the flowcharts and/or block diagrams and combinations of blocks in the flowchart and/or block diagrams can be implemented by computer readable program instructions.

These computer readable program instructions may be provided to a processing unit of a general-purpose computer, special purpose computer, or other programmable data processing apparatus to produce a machine, such that the instructions, which execute via the processing unit of the computer or other programmable data processing apparatus, create means for implementing the functions/actions specified in one or more blocks of the flowchart and/or block diagrams. These computer readable program instructions may also be stored in a computer readable storage medium that can direct a computer, a programmable data processing apparatus, and/or other devices to function in a particular manner, such that the computer readable medium storing the instructions includes an article of manufacture including instructions which implement various aspects of the functions/actions specified in one or more blocks of the flowchart and/or block diagrams.

**The** computer readable program instructions may be loaded onto a computer, other programmable data processing apparatus, or other devices, causing a series of operational steps to be performed on a computer, other programmable data processing apparatus, or other devices, to produce a computer implemented process such that the instructions, when being executed on the computer, other programmable data processing apparatus, or other devices, implement the functions/actions specified in one or more blocks of the flowchart and/or block diagrams.

The flowcharts and block diagrams in the drawings illustrate the architecture, functionality, and operations of possible implementations of the systems, methods and computer program products according to various implementations of the present disclosure. In this regard, each block in the flowchart or block diagram may represent a module, segment, or portion of instructions which includes one or more executable instructions for implementing the specified logical function(s). In some alternative implementations, the functions marked in the blocks may occur in a different order than those marked in the drawings. For example, two consecutive blocks may actually be executed in parallel, or they may sometimes be executed in reverse order, depending on the function involved. It should also be noted that each block in the block diagrams and/or flowcharts, as well as combinations of blocks in the block diagrams and/or flowcharts, may be implemented using a dedicated hardware-based system that performs the specified function or operations, or may be implemented using a combination of dedicated hardware and computer instructions.

Various implementations of the disclosure have been described as above, the foregoing description is exemplary, not exhaustive, and the present application is not limited to the implementations as disclosed. Many modifications and variations will be apparent to those of ordinary skill in the art without departing from the scope and spirit of the implementations as described. The selection of terms used herein is intended to best explain the principles of the implementations, the practical application, or improvements to technologies in the marketplace, or to enable those skilled in the art to understand the implementations disclosed herein.

## Claims

1. A method for video interaction, comprising:
receiving a user input indicating a question to a target video; and
determining reply content corresponding to the user input based on content description information of the target video and a first group of video images in the target video, wherein the first group of video images are obtained by performing frame extraction on a plurality of video segments of the target video respectively.

2. The method of claim 1, wherein the content description information of the target video is determined by:
splitting the target video into the plurality of video segments;
determining, for a video segment of the plurality of video segments, content description information of the video segment; and
determining the content description information of the target video based on the content description information of the video segment.

3. The method of claim 2, wherein determining the content description information of the video segment comprises:
obtaining a second group of video images corresponding to the video segment by performing frame extraction on the video segment; and
determining the content description information of the video segment by using a first model based on the second group of video images corresponding to the video segment.

4. The method of claim 3, wherein the number of images in the second group of video images is greater than the number of images in the first group of video images.

5. The method of claim 3, wherein determining the content description information of the video segment by using the first model based on the second group of video images corresponding to the video segment comprises:
obtaining association description information comprising content description information of at least one adjacent video segment of the video segment; and
determining the content description information of the video segment by using the first model based on the association description information and the second group of video images corresponding to the video segment.

6. The method of claim 5, wherein obtaining the second group of video images by performing frame extraction on the video segment comprises:
iteratively performing the following steps until a predetermined condition is satisfied:
using an image extracted from the video segment as a reference image and as an image in the second group of video images;
sequentially comparing subsequent images of the reference image in the video segment with the reference image;
in response to determining that a difference between a first image and the reference image satisfies a specified condition, replacing the reference image with the first image; and
obtaining the second group of video images based on the replaced reference image.

7. The method of claim 3, wherein the first group of video images are determined by:
obtaining the first group of video images by performing frame extraction on the second group of video images corresponding to the video segment in the plurality of video segments.

8. The method of claim 1, wherein the first group of video images comprises a plurality of images, and determining the reply content corresponding to the user input comprises:
determining a feature representation of a changed element among the plurality of images based on a feature representation of each image of the plurality of images;
determining a feature representation of the user input;
determining a feature representation of the content description information; and
generating the reply content by using a second model based on at least one of the feature representation of the user input, the feature representation of each image, the feature representation of the changed element, and the feature representation of the content description information.

9. An apparatus for video interaction, comprising:
a user input receiving module configured to receive a user input indicating a question to a target video; and
a reply content determining module configured to determine reply content corresponding to the user input based on content description information of the target video and a first group of video images in the target video, wherein the first group of video images are obtained by performing frame extraction on a plurality of video segments of the target video respectively.

10. An electronic device, comprising:
at least one processing unit; and
at least one memory coupled to the at least one processing unit and storing instructions for execution by the at least one processing unit, the instructions, when executed by the at least one processing unit, cause the electronic device to perform the method according to any one of claims 1 to 8.

11. A computer readable storage medium, on which a computer program is stored, wherein the computer program is executable by a processor to implement the method according to any one of claims 1 to 8.
